## Europäisches Patentamt

## European Patent Office

## Office européen des brevets

(11) Veröffentlichungsnummer: **0 499 788 A1**

# EUROPÄISCHE PATENTANMELDUNG

(21) Anmeldenummer: **92100615.1**

(22) Anmeldetag: **15.01.92**

(51) Int. Cl.5: **B05B 5/16**, B65G 53/22, B05B 7/14

(30) Priorität: **22.02.91 DE 4105663**

(43) Veröffentlichungstag der Anmeldung:
**26.08.92 Patentblatt 92/35**

(84) Benannte Vertragsstaaten:
**CH FR GB IT LI NL SE**

(71) Anmelder: **METRI AIRFLUID AG**
**Kesselbachstrasse 42**
**CH-9450 Altstätten(CH)**

(72) Erfinder: **Krämer, Erich**
**Röthenstrasse 21**
**W-8626 Michelau(DE)**

(74) Vertreter: **Münzhuber, Robert, Dipl.-Phys.**
**Patentanwalt Rumfordstrasse 10**
**W-8000 München 5(DE)**

(54) **Einrichtung zum Speisen eines elektrostatischen Pulverbeschichtungsgeräts mit einem Pulver-Luft-Strom.**

(57) Es wird eine Einrichtung zum Speisen eines elektrostatischen Pulverbeschichtungsgeräts mit einem Pulver-Luft-Strom geschaffen, die aus einem im wesentlichen zylindrischen Pulvertransportbehälter (10), einer das im Behälter befindliche Pulver aus diesem nach unten abfördernden und über einen Druckluft-Injektor (20) dem Pulverbeschichtungsgerät zuführenden Pulverleitung, einer Fluidisierluft-Zuführleitung zum Auflockern des Pulvers unmittelbar vor dessen Eintritt in die Pulverleitung (22)em Fluidisierbecher (15)gegenüber dem Pulverbehälter (10)ntlich kleineren Durchmesser, einem im Fluidisierbecher untergebrachtem Fluidisiertrichter (17) mit strömungsmäßig vorgeschaltetem Pulver-Durchflußregler (16) und einem den Pulverbehälter mit dem Fluidisierbecher verbindenden Pulvertrichter (11) besteht.

FIG.1A

Die Erfindung betrifft eine Einrichtung zum Speisen eines elektrostatischen Pulverbeschichtungsgeräts mit einem Pulver-Luft-Strom, bestehend aus einem im wesentlichen zylindrischen Pulvertransportbehälter, einer das im Behälter befindliche Pulver aus diesem nach unten abführenden und über einen Druckluft-Injektor als Pulver-Luft-Strom dem Pulverbeschichtungsgerät zuführenden Pulverleitung und einer Fluidisierluft-Zuführleitung zum Auflockern des Pulvers unmittelbar vor dessen Eintritt in die Pulverleitung.

Bei elektrostatischen Pulver-Beschichtungsgeräten muß den Applikatoren, also den Pulverpistolen, das Pulver in Form eines Pulver-Luft-Gemisches zugeführt werden, wobei eine möglichst gleichmässige Verteilung der Pulverpartikel im Pulver-Luft-Strom von besonderer Bedeutung ist. Üblicherweise geht man dabei so vor, daß das in Transportbehältern, auch Originalgebinde genannt, nämlich Säcke, Fässer, Kartons oder Kunststoffbehälter, antransportierte Pulver zunächst in spezielle Aufarbeitungsbehälter geschüttet wird. Diese Aufbereitungsbehälter weisen einen Innenboden in Form einer porösen Platte, meist Fluidisierboden genannt, eine Druckluftzufuhr und eine Abführleitung auf. Durch die Druckluft wird das Pulver über dem Fluidisierboden stark aufgelockert und fluidisiert, wobei dann aus dem entstehenden Schwebebett das Pulver-Luft-Gemisch abgeführt und zur Pulverpistole gefördert wird. Ein Beispiel für einen derartigen Aufbereitungsbehälter mit Fluidisierboden offenbart die DE-PS 36 11 039. Ein Nachteil dieser Aufbereitungsbehälter besteht zum einen in dem zusätzlichen Arbeitsgang zum Umfüllen des Pulvers aus dem Transportbehälter in den Aufbereitungsbehälter und zum anderen in dem für ihre Reinigung erforderlichen Aufwand, was besonders dann zum Tragen kommt, wenn häufige Pulver-Farbwechsel erforderlich sind.

Es ist aber auch bereits bekannt, das Pulver unmittelbar aus dem Transportbehälter abzusaugen. So offenbart die EP 0 184 994 eine aus einem Saugrohr und mehreren Druckluftleitungen bestehende, lanzenartige Pulverabsaugvorrichtung, die von oben her in den - vorher geöffneten - Transportbehälter eingeführt wird, worauf das Pulver im Bereich der Mündung des Absaugrohrs durch die Druckluft fluidisiert und das so fluidisierte Pulver abgesaugt wird. Ein spezieller Aufbereitungsbehälter wird also hier eingespart und Farbwechsel sind wesentlich schneller und einfacher durchzuführen. Andererseits ist es jedoch schwierig, mit einer derartigen Sauglanze den Transportbehälter restfrei zu leeren; im Allgemeinen bleiben seitlich am Behälterboden Pulverreste zurück. Vermieden kann dies mit einer Einrichtung gemäß der - nicht vorveröffentlichten - deutschen Patentanmeldung P 40 10 914.3-51 werden, bei der auf den geöffneten Transportbehälter ein Deckel aufgesetzt wird, der an seiner Innenseite mit Abstand zur Deckeldecke eine Fluidisierplatte und zwischen Deckeldecke und Fluidisierplatte einen Fluidisierlufteinlaß aufweist, wobei nach dem Aufsetzen dieses Deckels die aus Pulverbehälter und Deckel bestehende Einheit um 180° verschwenkt wird, worauf Fluidisierluft zugeführt und das über der Fluidisierplatte fluidisierte Pulver durch ein Pulverrohr hindurch nach unten abgezogen wird, und zwar mittels eines in die Pulverleitung eingesetzten Druckluft-Injektors. Weil sich hier die Fluidisierplatte über den gesamten Querschnitt des Pulverbehälters erstreckt, kann dieser im wesentlichen restfrei geleert werden. Andererseits führt diese sich über den Gesamtquerschnitt des Pulverbehälters erstreckende Fluidisierplatte, auf welcher die gesamte Pulvermasse aufliegt, dazu, daß beträchtliche Mengen an Fluidisierluft zugeführt werden müssen, um eine einwandfreie Fluidisierung zu erreichen.

Aufgabe der vorliegenden Erfindung ist es deshalb, eine Einrichtung gemäß dem Oberbegriff des Patentanspruchs so zu verbessern, daß mit möglichst geringen Mengen an Fluidisierluft eine restfreie Abförderung eines gleichmäßigen Pulver-Luft-Gemisches unmittelbar aus dem Transportbehälter möglich ist, wobei dann der geleerte Transportbehälter leicht gereinigt und platzsparend zum Pulverhersteller zurückgeführt werden kann. Die Lösung dieser Aufgabe ergibt sich aus den kennzeichnenden Merkmalen des Patentanspruchs 1.

Bei der Erfindung wird also das Pulver aus dem Transportbehälter nach unten abgeführt, wobei jedoch der trichterförmige Fluidisierboden einen beträchtlich geringeren Durchmesser als der Pulverbehälter hat und durch einen Pulver-Durchflußregler gegenüber der darüber befindlichen Pulvermasse "abgeschottet" wird, mit der Folge eines sehr geringen Fluidisierluftverbrauchs. Durch den Pulvertrichter wird jedoch sichergestellt, daß der Pulverbehälter restlos geleert werden kann.

Auf der Zeichnung sind Ausführungsformen der Erfindung dargestellt. Es zeigen:

Fig. 1

schematisch eine erste Ausführungsform im Vertikalschnitt,

Fig. 1A

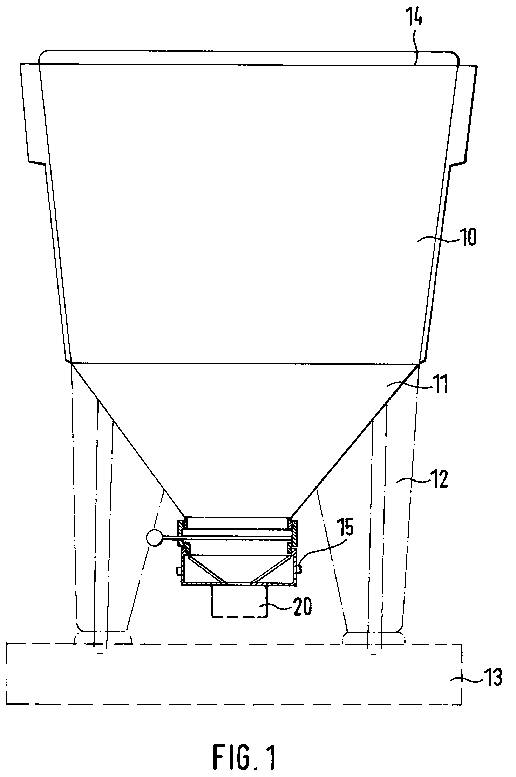

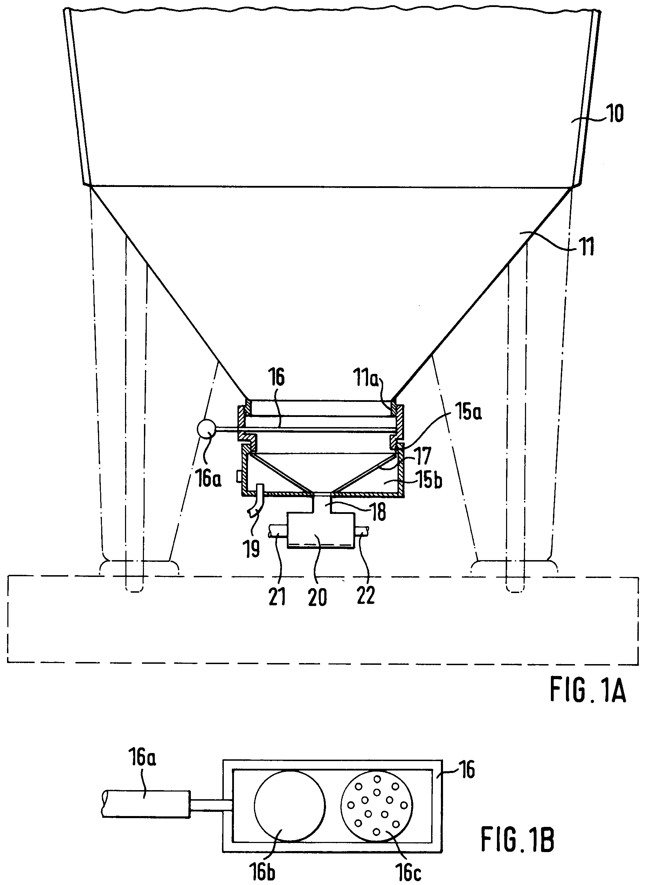

einen Ausschnitt aus Fig. 1 in vergrößertem Maßstab,

Fig. 1B

in Einzeldarstellung den Durchflußregelschieber von Fig. 1 in Draufsicht,

Fig. 2

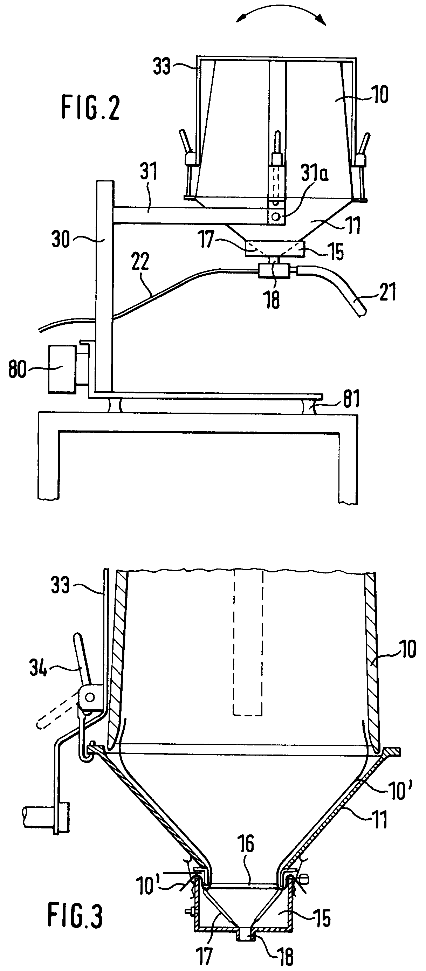

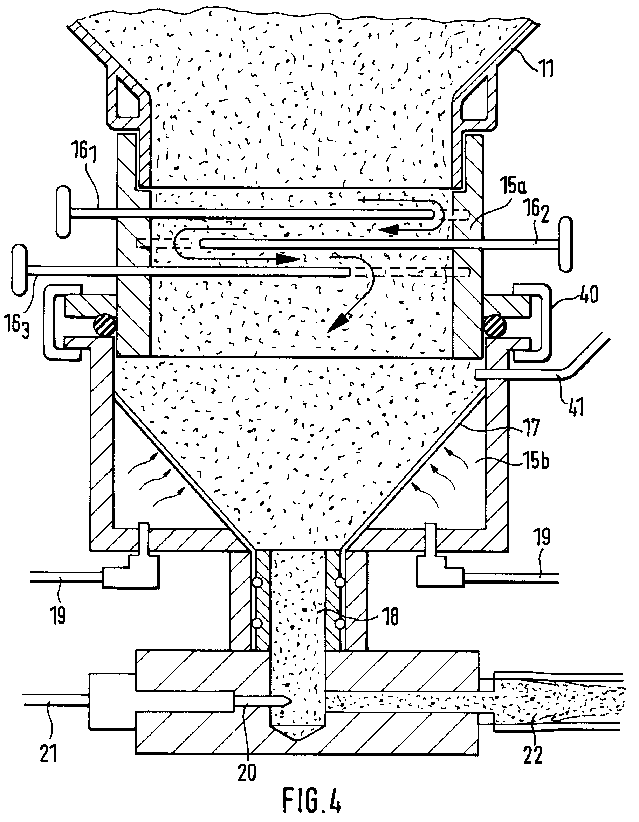

schematisch eine Seitenansicht einer zweiten Ausführungsform der Erfindung, teilweise geschnitten,

Fig. 3

im vergrößerten Maßstab einen Ausschnitt aus Fig. 2 mit eingesetztem Pulversack,
Fig. 4
eine abgewandelte Ausführungsform eines Durchflußregelschiebers in einer Ansicht ähnlich Fig. 1A,
Fig. 5
schematisch in Seitenansicht eine Abwandlungsform des Durchflußregelschiebers von Fig. 4,
Fig. 6
eine Draufsicht auf eine weitere Ausführungsform eines Durchflußreglers,
Fig. 7, 7A, 7B und 7C
einen Querschnitt durch eine weitere Ausführungsform eines Fluidisierbechers bzw. Draufsichten auf einzelne Bauteile dieses Fluidisierbechers, und
Fig. 8
eine Abwandlung des Durchflußreglers von Fig. 4.

Der in Fig. 1 und 1A dargestellte Pulver-Transportbehälter besteht aus dem eigentlichen Pulverbehälter 10, der sich nach unten einstückig in einen konischen Pulvertrichter 11 fortsetzt. Der Pulverbehälter 10 ist im wesentlichen zylindrisch, weist jedoch eine geringe Konizität mit Verengung in Richtung nach unten auf, um zwei oder mehrere derartiger Behälter 10 im Leerzustand ineinander stecken und damit stapeln zu können. Mit 12 sind Standfüße bezeichnet, die am Pulverbehälter 10 befestigt und so bemessen sind, daß dieser zum Transport auf eine genormte Palette 13 gestellt werden kann. Die obere Öffnung des Behälters 10 ist durch einen entfernbaren Deckel 14 verschließbar. Der untere Rand 11a des Pulvertrichters 11 ist zylindrisch geformt und weist an seiner Außenseite ein Gewinde zum aufschrauben eines im ganzen mit 15 bezeichneten Fluidisierbechers auf. Dabei besteht bei dieser Ausführungsform der Fluidisierbecher 15 aus zwei miteinander verschraubbaren Teilen, nämlich einem beidseits offenen Zylinderring 15a und einem unten geschlossenen Zylinderbecher 15b. Der Zylinderring 15a ist auf den Gewinderand 11a des Pulvertrichters 11 aufschraubbar und weist einen Schieber 16 mit nach außen abstehendem Handgriff 16a auf, wobei Ausbildung und Funktion des Schiebers 16 weiter unten noch im einzelnen erläutert werden. Der Zylinderbecher 15b ist mit seinem oberen Öffnungsrand am Zylinderring 15a anschraubbar und ist in seinem inneren mit einem trichterförmigen Fluidisierboden 17 versehen, der sich vom inneren oberen Mantelrand des Zylinderbechers ausgehend, konisch nach unten bis zum Zentrum des Becherbodens erstreckt und dort in eine den Becherboden durchsetzende, vertikal nach unten führende Pulverleitung 18 einmündet. In den vom Fluidisiertrichter 17 und der Zylinderbecherwandung begrenzten Raum mündet eine Fluidisierluft-Zuführleitung 19. Schließlich ist mit 20 ein Injektor bezeichnet, in welchen die Pulverleitung 18 und eine Druckluft-Zuführleitung 21 einmünden und von dem eine Förderleitung 22 zum Abfördern eines Pulver-Luft-Gemisches abgeht.

Aus Fig. 1B ist ersichtlich, daß der Schieber 16 zwei Schieberstellungen aufweist. In der Schieberstellung 16b sperrt der Schieber jeglichen Pulverdurchfluß, wohingegen in der Schieberstellung 16c Pulver durch die Sieböffnungen hindurchtreten kann.

Beim Pulverhersteller wird zunächst die aus Behälter 10, Pulvertrichter 11 und Standfüßen 12 bestehende Einheit gründlich gereinigt, worauf der Zylinderring 15a auf den unteren Trichterrand 11a aufgeschraubt und sein Schieber 16 in die Verschließstellung 16b gebracht wird. Diese Verschließstellung des Schiebers 16 wird vorzugsweise durch Rasten oder eine übliche Transportsicherung gesichert. Daraufhin wird nun das Pulver eingefüllt und nach erfolgter Füllung der Deckel 14 aufgesetzt. Der gefüllte Behälter kann nun zum Einsatzort transportiert werden, vorzugsweise auf der Palette 13. Am Einsatzort wird zunächst der Zylinderbecher 15b am Zylinderring 15a angeschraubt, und der Injektor 20 an der Pulverleitung 18 angebracht. Daraufhin werden mittels üblicher Steck- oder Schnellkupplungen die Fluidisierluftleitung 19 am Zylinderbecher 15b und die Druckluftleitung 21 sowie die Förderleitung 22 am Injektor angebracht. Für die Inbetriebnahme werden zunächst Fluidisierluft durch die Leitung 19 und Druckluft durch die Leitung 21 zugeführt, worauf der Schieber 16 aus seiner Schließposition 16b in seine Offenposition 16c gebracht wird. Damit rieselt nun Pulver aus dem Pulvertrichter 11 bzw. dem Behälter 10 durch die Schieber-Sieböffnungen hindurch in den Innenraum des Fluidisiertrichters 17, wo es durch die Fluidisierluft in einen fließfähigen Zustand gleichmäßiger Verteilung gebracht und durch die Wirkung des Injektors 20 durch die Pulverleitung 18 und die Förderleitung 22 abgezogen und als Pulver-Luft-Strom dem elektrostatischen Pulverbeschichtungsgerät zugeführt wird. Wenn das gesamte Pulver abgeführt worden ist, Pulverbehälter 10, Pulvertrichter 11, Fluidisierbecher 15 und Injektor 20 also leer sind, werden die Leitungen 19, 21 und 22, der Injektor 20, der Zylinderbecher 15b und der Zylinderring 15a abgenommen bzw. abgeschraubt, womit dann die aus Pulverbehälter 10 und Pulvertrichter 11 bestehende Einheit leicht gereinigt werden kann. Für den Rücktransport zum Pulverhersteller können nun mehrere solcher Leereinheiten 10, 11 ineinander gesteckt, was eine beträchtliche Platzersparnis bedeutet. Die zugehörigen Zylinderringe 15a mit Schieber 16 werden dabei gesondert mitgeführt.

Eine zweite Ausführungsform ist in Fig. 2 dargestellt, wobei der Ausführungsform von Fig. 1 entsprechende Teile mit den selben Bezugszeichen versehen sind. Bei dieser Ausführungsform ist der Pulvertrichter 11 kein einstückiger Bestandteil des Pulverbehälters 10 sondern wird am Einsatzort auf den Pulverbehälter in Art eines Deckels aufgesetzt, worauf Pulverbehälter mit Pulvertrichter in einer geeigneten Vorrichtung um 180° verschwenkt ("auf den Kopf gestellt") werden. In Fig. 2 ist bereits die um 180° verschwenkte Stellung dargestellt. Dabei weist die dargestellte Einrichtung gemäß Fig. 2 ein Traggestell 30 auf, bei dem zwischen zwei horizontalen Armen 31 eine ebenfalls horizontale Welle 32 gelagert ist, an welcher ein Aufnahmekorb 33 befestigt ist. Der Aufnahmekorb 33 ist so bemessen, daß ein Pulverbehälter 10 in ihn einpasst. Weiterhin ist der Aufnahmekorb 33 an seinem Umfang mit Kniehebeln 34 versehen, deren eines Ende als Greiferhaken 34a ausgebildet ist. In Aufnahmeposition befindet sich der Aufnahmekorb 33 in einer gegenüber der Darstellung von Fig. 2 um 180° verschwenkten Position, so daß das offene Korbende nach oben weist. Nunmehr wird ein Pulverbehälter 10 in den Aufnahmekorb gestellt und ein auf dem Pulverbehälter befindlicher Verschluß, etwa ein Deckel oder eine Folie, abgenommen. Nunmehr wird der Pulvertrichter mit aufgeschraubtem Fluidisierbecher 15 auf den Pulverbehälter 10 aufgesetzt und mittels der Kniehebel 34 befestigt, wobei die Hakenenden 34a in einen rinnenartigen Rand (Fig. 3) des Pulvertrichters 11 greifen. Jetzt kann der Aufnahmekorb 33 um die Welle 32 um 180° nach oben geschwenkt werden, womit sich dann Aufnahmekorb 33, Pulverbehälter 10, Pulvertrichter 11 und Fluidisierbecher 15 in der in Fig. 2 gezeigten Stellung befinden. Jetzt sind noch der Injektor 20 am Pulverrohr 18, die Fluidisierluftleitung 19 am Fluidisierbecher 15 sowie die Druckluftleitung 21 und die Förderleitung 22 am Injektor 20 anzuschließen, worauf der Fluidisier- und Fördervorgang beginnen kann. Dabei werden wiederum, wie bei der Ausführungsform nach Fig. 1, zunächst die Fluidisierluft und die Injektor-Druckluft eingeschaltet und daraufhin der Schieber 16 geöffnet.

Im Gegensatz zur Ausführungsform nach Fig. 1 können bei derjenigen nach Fig. 2 zylindrische Pulverbehälter verwendet werden, also handelsübliche Behälter ohne angeformten Pulvertrichter. Weiterhin ist von Bedeutung, daß der Schieber 16 keine Verschließfunktion haben muß und am Einsatzort verbleiben kann, weil ja beim Transport der einen geschlossenen Boden aufweisenden zylindrischen Pulverbehälter 10 kein Verschließorgan erforderlich ist. Bei dieser Ausführungsform wirkt also der Schieber 16 ausschließlich als Dosierorgan, beispielsweise in der Weise, daß die Position 16b ebenfalls Durchbohrungen aufweist, wobei Zahl und/oder Größe dieser Durchbohrungen gegenüber den Durchbohrungen der Position 16c unterschiedlich ist, so daß sich unterschiedliche Pulver-Durchflußraten ergeben. Der Vollständigkeit halber sei aber hier noch darauf hingewiesen, daß der Schieber 16 zwar nicht zum vollständigen Verschließen erforderlich ist, jedoch aufgrund seiner Dosierfunktion nicht weggelassen werden kann; bei einem vollständigen Weglassen des Schiebers 16 würde selbst bei starker Fluidisierluft das Pulver unaufgelockert durch die Öffnung des Pulverrohrs 18 nach unten in den Injektor 20 schießen. Eine Vereinfachung gegenüber der Ausführungsform nach Fig. 1 ist jedoch möglich, nämlich den Fluidisierbecher einstückig auszubilden, weil ja Schieber und Fluidisiertrichter nicht für den Rücktransport getrennt werden müssen. Zwar wäre auch bei der Ausführungsform nach Fig. 1 ein ungeteilter Fluidisierbecher möglich, doch erscheint es wenig sinnvoll, nur zum Zweck des Verschließens den ganzen Fluidisierbecher jeweils mit den Behältern zum Pulverhersteller zurückzutransportieren.

Bei der Beschreibung der Fig. 2 ist also davon ausgegangen worden, daß in den Aufnahmekorb 33 ein Pulverbehälter, beispielsweise ein Kunststoffbehälter mit abnehmbaren Transportdeckel, eingesetzt wird. Häufig befindet sich aber das Pulver nicht unmittelbar im Behälter 10 sondern in einem Foliensack, der seinerseits dann in den Behälter 10 eingesetzt ist. In diesem Fall ist der Sack zu öffnen und sein Rand über den Rand des Aufnahmekorbs 3 zu schlagen, worauf dann der Pulvertrichter 11 aufgesetzt unter festklemmen des Sackrandes aufgesetzt wird. Eine andere Lösung des Festklemmens des Randes eines Foliensacks ist in Fig. 3 dargestellt. Dabei ist, im Gegensatz zu Fig. 2, der Fluidisierbehälter 15 nicht mit dem Pulvertrichter 11 einstückig sondern mit diesem durch einen Klemmverschluß verbindbar. In diesem Fall wird dann der Rand des geöffneten Foliensacks 10' durch den Pulvertrichter 11 hindurch bis über dessen Unterrand gezogen, worauf dann der Fluidisierbehälter 15, den Sackrand festklemmend, aufgesetzt wird. Damit ergibt sich der Vorteil, daß auch der Pulvertrichter 11 nicht mit dem Pulver in unmittelbare Berührung kommt, eine Reinigung des Pulvertrichters 11 sich somit erübrigt.

Nachfolgend sollen nun noch einige zweckmäßige Ausgestaltungen des Fluidisierbechers und insbesondere des Dosierschiebers erläutert werden. So zeigt Fig. 4 einen zweiteiligen Fluidisierbecher 15, dessen beide Teile 15a und 15b durch Steck-Klammern 40 zusammengehalten sind. Der im Zylinderring 15a untergebrachte Dosierschieber 16 besteht dabei aus drei Einzelschiebern $16_1$, $16_2$ und $16_3$, die dann, wenn sie mehr oder minder weit geöffnet werden, einen labyrinthartigen Weg für das Pulver freigeben. Der Vorteil dieses Mehrfach-Dosierschiebers 16 ist, daß die Durchflußmenge an Pulver sehr genau eingestellt werden kann und die Strömungsgeschwindigkeit vergleichsweise niedrig ist. Schließlich ist bei dieser Ausführungsform eine Entlüftungsleitung 41 vorgesehen, die aus dem Innenraum des Fluidisierbechers zwischen Dosierschieber 16 und Fluidisiertrichter 15 abgeht und mit einem - nicht gezeichneten - Regelventil versehen sein kann. Diese Leitung 41 dient dazu, im Falle überschüssiger Fluidisierluft diese abzuleiten.

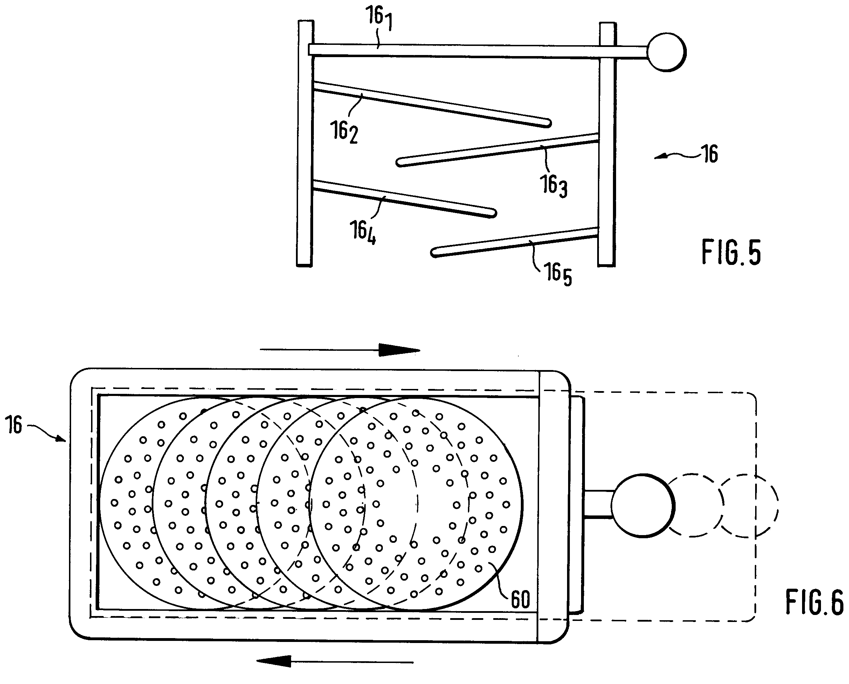

Fig. 5 zeigt eine Abwandlungsform eines Mehrfach-Dosierschiebers 16. Dabei besteht dieser Mehrfach-Schieber 16 aus einem verschiebbaren Schieber $16_1$ und vier darunter angeordneten, vorzugsweise starren Schieberplatten $16_2$, $16_3$, $16_4$ und $16_5$ die gegenüber der horizontalen schräg nach unten angestellt sind. Durch die Anstellung der starren Schieberplatten wird ein sehr gleichmäßiger Pulverstrom erhalten.

Fig. 6 zeigt einen Dosierschieber 16 aus mehreren Lochscheiben, die gegeneinander verschiebbar sind und damit einen größeren oder kleineren Pulverdurchlaß gestatten.

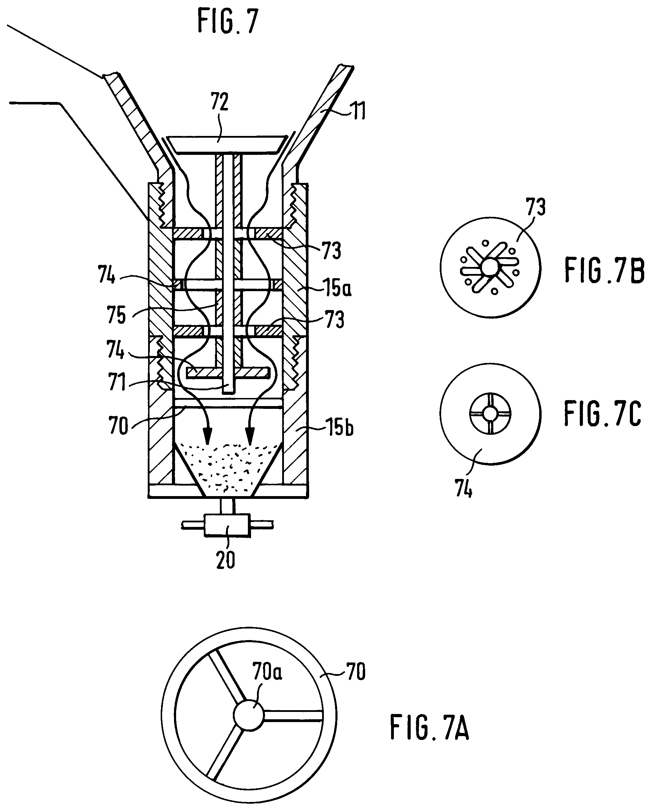

Fig. 7 zeigt einen Fluidisierbecher 15 mit besonders zweckmäßiger Konstruktion. Der Fluidisierbecher 15 ist, wie etwa bei der Ausführungsform nach Fig. 1, zweiteilig ausgebildet, wobei der Zylinderring 15a und der Zylinderbecher 15b miteinander verschraubt sind. Im Zylinderbecher 15b ist oberhalb des Fluidisiertrichters 17 ein Haltering 70 eingelegt, wobei dieser Haltering 70 in Fig. 7A in Draufsicht dargestellt ist. Im Zylinderring 15a ist zentrisch eine Ventilstange 71 angeordnet, die an ihrem oberen Ende einen Ventilteller 72 und zwischen Ventilteller 72 und unterem Stangenende vier Dosierscheiben 73, 74, 73, 74 trägt. Die Dosierscheiben sind in den Fig. 7B und 7C in Draufsicht dargestellt und zwingen, wie in Fig. 7 durch Pfeile dargestellt, das Pulver dazu, einen labyrinthartigen Rieselweg von oben nach unten durchzuführen. Fixiert werden die Scheiben 73, 74 an der Ventilstange 71 durch lose Abstandhalter-Hülsen 75. Die Fixierung der untersten Scheibe 74 wird nachfolgend noch erläutert werden.

In Ruhelage, also wenn auf die Ventilstange 71 kein Druck von unten nach oben ausgeübt wird, der Becherteil 15b mit Haltering 17 also abgenommen ist, dann liegt der Ventilteller 72 am unteren Rand des Pulvertrichters 11 auf und zwar aufgrund des Gewichts des Pulvers unter Druck. Wird nun der untere Becherteil 15b mit Haltering 70 aufgeschraubt, dann drückt die Nabe 70a des Halterings 70 die Ventilstange 71 und damit den Ventilkörper 72 nach oben, so daß durch den entstehenden Ringspalt Pulver nach unten strömen kann. Wird bei dieser Ausführungsform die unterste Dosierscheibe 74 ebenfalls durch eine lose Abstandhalter-Hülse 75 fixiert, dann können nach Abschrauben des unteren Becherteils 15b alle Dosierscheiben und Abstandhalter-Hülsen aus dem Zylinderring 15a entnommen und einzeln gereinigt werden. Freilich kann dann das "auffädeln" der Scheiben und Ringe auf die Ventilstange 71 beim Zusammenbau etwas mühsam sein. Um dies zu vermeiden kann die unterste Dosierscheibe 74 fest an der Ventilstange 71 befestigt werden, etwa durch aufschrauben, durch einen Splint, durch eine aufgelötete Abstandhalter-Hülse oder dergleichen. In diesem Fall wird dann zwecks Reinigung die aus den Bauteilen 71, 72, 73, 74 und 75 bestehende Einheit bei abgenommenem Pulvertrichter 11 nach oben herausgezogen.

Die Ausführungsform von Fig. 7 kann auch so ausgebildet werden, daß die Stange 71 geteilt ist, derart, daß der obere, den Ventilteller 72 tragende Teil der Stange 71 auf der oberen Scheibe 73, die ähnlich der Scheibe 70 mit einer Mittelnabe ausgerüstet ist, aufsitzt. Beim Transport verbleibt dann nur dieser obere, kurze Stangenteil mit Teller 72 und Scheibe 73 am Behälter 10, 11.

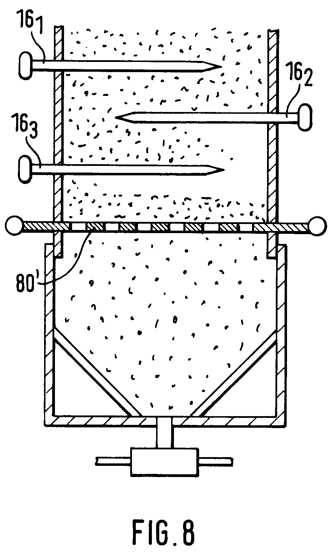

Fig. 8 schließlich zeigt, daß zusätzlich zu den Dosierschiebern 16 ein Sieb 80 vorgesehen werden kann, das vorzugsweise austauschbar ist, so daß Siebe verschiedener Maschenweite verwendet werden können.

Selbstverständlich ist die Erfindung nicht auf die dargestellten und beschriebenen Ausführungsformen beschränkt, sondern es sind diesen gegenüber zahlreiche Abwandlungen möglich. So kann der Pulvertrichter entweder ein integraler Bestandteil des Pulverbehälters oder aber ein gesonderter Bauteil sein, der mit dem Pulverbehälter lösbar verbindbar ist, wobei die Verbindung eine Schraubverbindung, eine Klemmverbindung, eine Steckverbindung und dergleich sein kann. Ähnliches gilt für den Fluidisierbecher. Auch dieser kann entweder mit dem Pulvertrichter einstückig sein, insbesondere dann, wenn dieser ein bezüglich des Pulverbehälters gesonderter Bauteil ist, und zwar entweder im Ganzen, oder aber, wenn der Fluidisierbecher geteilt ist, ist es möglich, den oberen Teil des Fluidisierbechers, also den den Dosierschieber beinhaltenden Zylinderring, mit dem Pulvertrichter einstückig zu verbinden. Die andere Möglichkeit besteht darin, daß der Fluidisierbecher ein gesonderter Bauteil ist, der mittels einer geeigneten Verbindung lösbar am Pulvertrichter anbringbar ist. Dabei kann, wie bereits erwähnt, der Fluidisierbecher zweiteilig ausgebildet sein, wobei seine beiden Teile ebenfalls durch lösbare Verbindungen geeigneter Konstruktion, etwa Schraub- oder Klemmverbindungen, miteinander verbindbar sind. Weiterhin sind zahlreiche Abwandlungen des Dosierschiebers möglich. Wenn der Pulverbehälter an der Einsatzstelle keine Drehung um 180° erfahren soll, dann muß der Dosierschieber nicht nur in der Lage sein, den Durchfluß von Pulver zu dosieren, sondern darüberhinaus den Pulverabfluß völlig zu unterbrechen. Dabei kann der Dosierschieber für die Unterbrechung des Pulverabflusses, also für einen Abschluß des Pulverbehälters bzw. des Pulvertrichters ein gesondertes Bauteil aufweisen, oder aber ein einziges Bauteil vermag sowohl völlig abzuschließen als auch einen Durchfluß in seiner Menge zu steuern. Anstelle der dosierenden Schieber können auch sogenannte Zentralblenden verwendet werden, also Ringblenden, deren zentrale Blendenöffnung in ihrem Durchmesser verstellbar ist. Die Betätigung der Dosierschieber bzw. -blenden kann manuell oder aber auch motorisch erfolgen, wobei im letzteren Fall an eine programmgesteuerte Durchflußregelung gedacht ist. Bei allen erwähnten Abwandlungen müssen aber die beiden wesentlichen Erfindungsmerkmale erhalten bleiben, nämlich der Fluidisiertrichter mit gegenüber dem Fluidisierbehälter wesentlich verringertem Durchmesser und die diesem Fluidisiertrichter vorgeschaltete, in ihrem Pulverdurchfluß steuerbare Dosiervorrichtung.

Um das Pulver zum Rieseln zu bringen und zur Vergleichsmäßigung der Auflockerung des Pulvers können zusätzlich Schwingungen eingesetzt werden. So ist es beispielsweise möglich, wie an sich bekannt, den Pulverbehälter an einen Vibrator 80 anzuschließen und ihn durch Gummipuffer 81 oder dergleichen gegenüber einer Bodenplatte oder einem Halterungsgestell, etwa dem in Fig. 2 gezeigten Verschwenkgestell, schwingungsmäßig zu isolieren. Eine andere Möglichkeit besteht darin, den Pulver-Durchflußregler und/oder den Fluidisiertrichter mittels eines Vibrators in Schwingungen zu versetzen, vorzugsweise Horizontalschwingungen und gegenüber den anderen Bauteilen durch elastische Mittel abzuisolieren. Schließlich kann durch - eventuell programmgesteuerte - Änderung von Amplitude und/oder Frequenz der Schwingungen der Pulver-Durchfluß mengenmäßig verändert werden.

**Patentansprüche**

1. Einrichtung zum Speisen eines elektrostatischen Pulverbeschichtungsgeräts mit einem Pulver-Luft-Strom, bestehend aus
   - einem im wesentlichen zylindrischen Pulvertransportbehälter,
   - einer das im Pulverbehälter befindliche Pulver aus diesem nach unten abführenden und über einen Druckluft-Injektor als Pulver-Luft-Strom dem Pulverbeschichtungsgerät zuführenden Pulverleitung und
   - einer Fluidisierluft-Zuführleitung zum Auflockern des Pulvers unmittelbar vor dem Eintritt des Pulvers in die Pulverleitung, gekennzeichnet durch
   - einen oben offenen, einen wesentlich geringeren Maximaldurchmesser als der Pulverbehälter (10) aufweisenden Fluidisierbecher (15),
   - einen im Fluidisierbecher (15) angeordneten, trichterförmigen Fluidisierboden (17), der sich vom Bechermantel zum Mittelpunkt des Becherbodens hin konisch verengt und dort mit der vom Becherboden abgehenden Pulverleitung (18) verbunden ist, wobei die Fluidisierluft-Zuführleitung (19) in den Raum zwischen Fluidisiertrichter (17) und Becherwandung einmündet,
   - einem sich vom Pulverbehälter (10) zum Fluidisierbecher (15) hin konisch verengenden Pulvertrichter (11), der den Innenraum von Pulverbehälter (10) und Fluidisierbecher (15) miteinander verbindet, und
   - einem über dem Fluidisiertrichter (15) angeordneten Pulver-Durchflußregler (16).

2. Einrichtung nach Anspruch 1, dadurch gekennzeichnet, daß der Pulvertrichter (11) einstückiger Bestandteil des Pulverbehälters (10) ist.

3. Einrichtung nach Anspruch 1, dadurch gekennzeichnet, daß der Fluidisierbecher (15) mittels Klemm-, Steck- oder Schraubverbindungen leicht lösbar am Auslaufrand (11b) des Pulvertrichters (11) befestigbar ist.

4. Einrichtung nach Anspruch 1, dadurch gekennzeichnet, daß der Pulvertrichter (11) mittels Klemm-, Steck- oder Schraubverbindungen leicht lösbar am Öffnungsrand des Pulverbehälters (10) befestigbar ist.

5. Einrichtung nach Anspruch 4, dadurch gekennzeichnet, daß der Fluidisierbecher (15) einstückig mit dem Pulvertrichter (11) ausgebildet ist.

6. Einrichtung nach einem der Ansprüche 1 - 5, dadurch gekennzeichnet, daß der Fluidisierbecher (15) aus zwei leicht lösbar miteinander verbindbaren Teilen (15a, 15b) besteht, wobei der eine Teil ein Zylinderring (15a) ist und den Pulver-Durchflußregler (16) beinhaltet, wohingegen der andere Teil ein Zylinderbecher (15b) ist, der den Fluidisiertrichter (17) enthält.

7. Einrichtung nach einem der Ansprüche 1 - 6, dadurch gekennzeichnet, daß der Pulver-Durchflußregler (16) in seiner einen Endstellung eine Durchflußsperre ist.

8. Einrichtung nach Anspruch 7, dadurch gekennzeichnet, daß der Pulver-Durchflußregler ein Schieber ist.

9. Einrichtung nach Anspruch 8, dadurch gekennzeichnet, daß der Durchfluß-Regelschieber (16) aus mehreren Einzelschiebern besteht, die zwischen sich einen labyrinthartigen Pulver-Strömungsweg freigeben.

10. Einrichtung nach Anspruch 9, dadurch gekennzeichnet, daß zumindest ein Teil der Einzelschieber eine Neigung in Strömungsrichtung des Pulvers aufweist.

11. Einrichtung nach einem der Ansprüche 1 - 7, dadurch gekennzeichnet, daß der Pulver-Durchflußregler (16) aus mehreren Scheiben besteht, die in Richtung des Scheibendurchmessers oder senkrecht dazu gegeneinander verschiebbar sind.

12. Einrichtung nach einem der Ansprüche 1 - 7, dadurch gekennzeichnet, daß der Pulver-Durchflußregler (16) in Art einer Zentralblende ausgebildet ist.

13. Einrichtung nach einem der Ansprüche 1 - 12, dadurch gekennzeichnet, daß von dem Raum zwischen Pulver-Durchflußregler (16) und Fluidisiertrichter (17) eine Entlüftungsleitung (41) abgeht.

14. Einrichtung nach einem der Ansprüche 1 - 13, dadurch gekennzeichnet, daß der Pulver-Durchflußregler (16) über eine Programmsteuerung motorisch, pneumatisch oder hydraulisch betätigbar ist.

15. Einrichtung nach einem der Ansprüche 1 - 14, dadurch gekennzeichnet, daß der Pulver-Durchflußregler (16) und/oder der Fluidisiertrichter (17) und/oder der Pulverbehälter (10) an einen Schwingungsvibrator (80) angeschlossen ist.

16. Einrichtung nach einem der Ansprüche 1 - 15, dadurch gekennzeichnet, daß der Pulver-Durchflußregler (16) als Pulversieb ausgebildet ist oder ein Pulversieb (80) aufweist.

FIG. 1

FIG.1A

FIG.1B

FIG.2

FIG.3

FIG.4

FIG.5

FIG.6

FIG.7

FIG.7B

FIG.7C

FIG.7A

FIG.8

European Patent Office

**EUROPEAN SEARCH REPORT**

Application Number

EP    92 10 0615

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-2 076 660 (COUREUR)<br>* page 2, line 4 - line 20 *<br>* page 3, line 29 - page 4, line 15 *<br>--- | 1,2,15 | B05B5/16<br>B65G53/22<br>B05B7/14 |
| A | WO-A-9 008 723 (ALCAN INTERNATIONAL LTD)<br>* page 2, line 12 - page 3, line 13 *<br>* page 4, line 22 - line 30 *<br>* figures 1-3 *<br>--- | 1,3 | |
| A | GB-A-2 061 855 (MATSUI  MFG CO LTD)<br>* page 3, line 75 - line 80; figure 5 *<br>--- | 1,4 | |
| A | DE-B-1 224 206 (DEUTSCHE EDELSTAHLWERKE AG)<br>* the whole document *<br><br>----- | 1 | |
|  |  |  | TECHNICAL FIELDS SEARCHED (Int. Cl.5)<br><br>B05B<br>B65G |

The present search report has been drawn up for all claims

| Place of search | Date of completion of the search | Examiner |
|---|---|---|
| THE HAGUE | 14 APRIL 1992 | JUGUET J.M. |